# EUROPEAN PATENT APPLICATION

(11) **EP 4 841 411 A1**
(43) Date of publication of application: **18.11.2026**
(21) Application number: 24916799.0
(22) Date of filing: 31.12.2024
(51) Int. Cl.: G06F 3/0483, G06Q 30/02

(54) **ADVERTISEMENT PLACEMENT CONFIGURATION PAGE DISPLAY METHOD, AND ELECTRONIC DEVICE**

(30) Priority: 10.01.2024 CN 202410042545
(71) Applicant: Hangzhou Alibaba International Internet Industry Co., Ltd., Hangzhou, Zhejiang 310052 (CN)
(72) Inventor: HUANG, Shumei, Shenzhen, Guangdong 518052 (CN); LI, Yin, Shenzhen, Guangdong 518052 (CN)
(74) Representative: Wu, Ting
(86) International application number: PCT/CN2024/144142
(87) International publication number: WO 2025/148752

(57) **Abstract**

The embodiments of the present disclosure disclose an advertisement placement configuration page display method and an electronic device. The method includes: determining a product set to be advertised and at least two corresponding advertisement placement methods; providing a form in an advertisement placement configuration page; when switched to one of the advertisement placement methods via a tab option, providing an operation option for performing bid configuration under that advertisement placement method in the base bid column, and providing an operation option for performing premium configuration from the target dimension corresponding to that advertisement placement method in the premium configuration column, so as to complete base bid and premium configuration under multiple different advertisement placement methods by sharing the same form structure. Through the embodiments of the present disclosure, the configuration efficiency of multiple advertisement placement methods in complex configuration processes can be improved, while satisfying complex and diversified advertisement placement requirements and simplifying the form structure in the advertisement placement process.

## Description

This disclosure claims priority to the Chinese patent application filed with the China National Intellectual Property Administration on January 10, 2024, with application number 202410042545.2 and titled "Advertisement Placement Configuration Page Display Method and Electronic Device", the entire contents of which are incorporated herein by reference.

### TECHNICAL FIELD

The present disclosure relates to the field of information processing technology, and more particularly to an advertisement placement configuration page display method and electronic device.

### BACKGROUND

In a product information service system, merchant users can not only publish product information in the system, but can also use network advertisement placement to give certain products opportunities to increase exposure and traffic. The so-called network advertisement here refers to advertisements placed through the product information service system, which is an activity in which merchants promote their own products by transmitting paid information to consumers through the product information service system, thereby facilitating information exchange between consumers and merchants.

In a product information service system, multiple different types of advertisement placement methods can generally be provided to merchants, for example, two types can generally be included: SS (Sponsored Search, search results ad) and SP (Sponsored Product, recommended ad).

Here, SS refers to advertisements placed on the search results page. If a merchant needs to place SS-type advertisements for one or more of their products, the core is placing bids on search keywords matched to the product (in this process, the merchant needs to place bids on the keywords they purchase), such that when consumers search for such keywords, the product has a certain probability of appearing in the search results. In addition, individual premium bids can be placed for certain special positions in the search results page (for example, the first slot), that is, a certain premium rate is added on top of the aforementioned bid to make the bid for such a special position higher, thereby increasing the probability of the merchant's product appearing at such a special position and thus improving the advertisement effect.

SP refers to advertisements placed on the product recommendation page. The product recommendation page can include the client homepage, associated recommendations on the product detail page, associated recommendations on the order page, and so on. If a merchant needs to place SP-type advertisements for one or more of their products, they can place a bid for the product, such that when recommending products to consumers, the product has a certain probability of appearing in the product recommendation results. For SP-type advertisements, individual premium bids can also be placed for specific audiences; for example, a premium bid can be placed for a core user audience of a specific product on top of the aforementioned bid, thereby increasing the probability of the specific product being seen by users in that core user audience and thus improving the advertisement effect, and so on.

In summary, there can be multiple types of advertisement placement methods, and in the process of placing various types of advertisements, bids must also be placed separately - that is, how much the merchant is willing to pay for specific keywords (corresponding to SS-type advertisements) or products (corresponding to SP-type advertisements; the product base bid in SP is the base price for audience premium bidding; if the audience premium rate is 0%, the product base bid is used for the winning bid). On this basis, for certain products, if the merchant wants to obtain a higher ranking or appear at a special position in the search results page, or if the merchant wants to target users recommended to a specified audience, they can place a premium bid - that is, how much additional amount the merchant is willing to add, and so on. In the above process, the specific bids, premium bids, and other configurations all need to be configured by the merchant.

However, since there are multiple types of advertisement placement methods, and each type requires separate configurations such as bidding and premium, the placement process can be relatively complex. Some systems can only support purchasing SS-type or SP-type advertisements separately, meaning that only one type of advertisement can be purchased on the same page. However, since many merchants may need to purchase multiple different types of advertisements for the same batch of products simultaneously, some systems can support purchasing both SS-type and SP-type advertisements on the same page for ease of operation - that is, after selecting a batch of products, users can complete bidding and premium operations for both SS-type and SP-type advertisements by filling out a form on the page. However, in this case, it is usually necessary to fill out multiple forms on the page - for example, a form for configuring base bids for products/keywords, forms for separately configuring premium bids for SS-type and SP-type advertisements, and so on. However, during the configuration process, users need to repeatedly review product information and bid information across multiple forms, and modifications made by the user in a single form may affect other associated forms; yet users cannot quickly perceive the impact of such changes, and may instead become confused upon discovering that data has changed when they later navigate to the affected form. In addition, the presence of multiple forms makes the page very long, increases page complexity, and makes it more difficult to fill in information - especially when more capabilities are supported, the page complexity becomes even higher, which may cause some merchants who are unwilling to spend too much time entering information to simply give up. Furthermore, an excessively long page is also unfriendly to users who use small-sized screens.

### SUMMARY

The present disclosure provides an advertisement placement configuration page display method and electronic device, which can simplify the form structure in the advertisement placement process, reduce the page length, simplify the user's configuration operations, and are more friendly to display devices with small-sized screens.

The present disclosure provides the following solutions:
an advertisement placement configuration page display method, comprising:
determining a product set to be advertised, and at least two corresponding advertisement placement methods;
providing a form in an advertisement placement configuration page, where the form includes a product information column, a base bid column, and a premium configuration column, and the form further includes at least two tab options corresponding to the at least two advertisement placement methods respectively, for switching between different advertisement placement methods;
in a state where one of the advertisement placement methods has been switched to via the tab options, providing, in the base bid column, an operation option for performing bid configuration under that advertisement placement method, and providing, in the premium configuration column, an operation option for performing premium configuration from the target dimension corresponding to that advertisement placement method, so as to complete the base bid and premium configuration under multiple different advertisement placement methods by sharing the same form structure.

The advertisement placement methods include a method of placing advertisements for products to the product search results page based on keywords;
when the tab option corresponding to this advertisement placement method in the form is in a selected state, providing, in the premium configuration column, an operation option for performing premium configuration for resource slots at the target position in the search results page.

The advertisement placement configuration page further includes an operation option for selecting a keyword configuration method;
where, if automatic keyword configuration is selected, the base bid column in the form provides an operation option for performing bid configuration on automatically matched keywords during the process of automatically matching keywords for each product;
if manual keyword configuration is selected, the base bid column in the form displays the bid range corresponding to at least one keyword matched to the current product, and provides an operation entry for editing the keywords matched to each product, so that upon receiving a configuration request through the operation entry, an overlay interface is popped up to provide operation options for performing keyword configuration and corresponding bid configuration for each individual product.

Here, when manual keyword configuration is selected, the base bid column is split into a keyword column and a bid column, for displaying the keywords corresponding to each product and the base bid information at the keyword dimension level, respectively.

Here, the popped-up overlay interface supports user-defined keyword addition, as well as bid configuration for each individual keyword of an individual product, respectively.

Here, the advertisement placement method includes a method of placing advertisements for products on a product recommendation page;
when the tab option corresponding to the advertisement placement method in the form is in a selected state, the base bid column of the form provides operation options for placing bids on each product, and the premium configuration column provides an operation entry for performing premium configuration from the audience dimension, so that upon receiving a configuration request through the operation entry, the popped-up overlay interface provides operation options for performing audience selection and corresponding premium configuration.

Here, options are provided for performing batch audience premium configuration for multiple products, or for performing individual premium configuration for each individual product per audience, respectively.

Here, when the individual premium configuration option is selected, the premium configuration column is split into an audience identifier column and a premium ratio column, for displaying the audience identifiers and premium ratios configured for each product, respectively.

An advertisement placement configuration page display apparatus, comprises:
an information determination unit, configured to determine a product set to be advertised and at least two corresponding advertisement placement methods;
a form display unit, configured to provide a form in an advertisement placement configuration page, where the form includes a product information column, a base bid column, and a premium configuration column, and the form further includes at least two tab options corresponding to the at least two advertisement placement methods, respectively, for switching between different advertisement placement methods;
a configuration item providing unit, configured to, in a state where one of the advertisement placement methods is switched to via the tab option, provide operation options in the base bid column for performing bid configuration under the advertisement placement method, and provide operation options in the premium configuration column for performing premium configuration from the target dimension corresponding to the advertisement placement method, so as to complete base bid and premium configuration under multiple different advertisement placement methods by sharing the same form structure.

A computer-readable storage medium having stored thereon a computer program, which, when executed by a processor, implements the steps of the method according to any one of the preceding items.

An electronic device, comprises:
one or more processors; and
a memory associated with the one or more processors, the memory being configured to store program instructions that, when read and executed by the one or more processors, implement the steps of the method according to any one of the preceding items.

A computer program that, when executed in a computer, causes the computer to perform the steps of the method according to any one of the preceding items.

According to the specific embodiments provided by the present disclosure, the present disclosure discloses the following technical effects:
through the embodiments of the present disclosure, in the case where the same page supports the placement of multiple different types of advertisements such as SS (search result page advertisement) and SP (recommendation page advertisement), it is possible to complete the configuration of bids and premium bids for multiple different advertisement placement methods within a single form. Moreover, the format of the form has been specially designed to include only a small number of columns - such as the product information column, the base bid column, and the premium configuration column - and by providing corresponding tab options for different advertisement placement methods, the same form structure can be shared across different advertisement placement methods. Therefore, the configuration efficiency of multiple advertisement placement methods during complex configuration processes can be improved, while meeting complex and diverse advertisement placement requirements. Furthermore, multiple pages, multiple forms, and multiple configuration items can be consolidated, thereby effectively simplifying the form structure, shortening the page length, simplifying users' configuration operations, and making the display more friendly to small-sized screen devices. In addition, since all of the above operations are completed within a single form, there is no longer a need to repeatedly check product bid information across multiple forms, which is conducive to improving configuration efficiency. If a user modifies certain configurations - for example, deletes a product - the impact of that modification can be displayed directly within the form, and accordingly, the user can directly and immediately perceive the impact of the configuration modification within that form.

Of course, any product implementing the present disclosure does not necessarily need to achieve all of the advantages described above simultaneously.

### BRIEF DESCRIPTION OF THE DRAWINGS

In order to more clearly illustrate the embodiments of the present disclosure or the technical solutions in the prior art, the drawings required for use in the embodiments will be briefly described below. It is apparent that the drawings described below are merely some embodiments of the present disclosure, and that other drawings may be obtained from these drawings by those of ordinary skill in the art without any creative effort.
FIG. 1 is a schematic diagram of a system architecture provided by an embodiment of the present disclosure;
FIG. 2 is a flowchart of a method provided by an embodiment of the present disclosure;
FIG. 3 to FIG. 9 are schematic diagrams of user interfaces provided by embodiments of the present disclosure;
FIG. 10 is a schematic diagram of an electronic device provided by an embodiment of the present disclosure.

### DETAILED DESCRIPTION OF THE EMBODIMENTS

The technical solutions in the embodiments of the present disclosure will be clearly and completely described below with reference to the drawings in the embodiments of the present disclosure. Obviously, the described embodiments are only some embodiments of the present disclosure, not all embodiments. Based on the embodiments in the present disclosure, all other embodiments obtained by those of ordinary skill in the art fall within the scope of protection of the present disclosure.

In the embodiments of the present disclosure, in order to reduce page complexity, simplify user operations, and improve friendliness for small-sized screens, while maintaining the ability to configure bids and premium bids for multiple different advertisement placement methods within the same page, a unified form may be provided on the page, through which bid and premium configurations for multiple different advertisement placement methods can be completed. For example, assuming that a merchant needs to purchase both SS-type and SP-type advertisements for a batch of products simultaneously, then through the solution provided by the embodiments of the present disclosure, after completing the product selection, a form can be displayed on the specific advertisement placement configuration page, in which the user can complete multiple configuration operations for that batch of products, such as SS bid, SS premium, SP bid, SP premium, and other configurations.

It should be noted that, in the solutions of the prior art, bid and premium configurations typically need to be performed in different forms, whereas in the embodiments of the present disclosure, SS bid, SS premium, SP bid, and SP premium configurations are all completed within the same form. However, in specific implementations, the aforementioned single unified form is not simply a concatenation of multiple existing different forms. This is because, on one hand, a simple concatenation would not have a significant effect on shortening page length or simplifying operations; on the other hand, for a form, the content displayed therein must conform to the definition of a form, including, for example, the format and the meaning of each column, whereas the original multiple different forms differ in many ways with respect to these definitions, making it difficult to directly concatenate them; furthermore, since different advertisement placement methods such as SS and SP each require bid and premium configurations, simply defining multiple columns for bid and premium configurations under various different advertisement placement methods may also result in an overly complex form structure, or may cause the interface to appear too crowded due to an excessive number of columns, making it inconvenient for users to fill in the form-especially for small-sized screens, where it remains insufficiently user-friendly, among other issues.

Therefore, in order to complete SS bid, SS premium, SP bid, and SP premium configurations within the same form, one of the more critical aspects is how to design the form format and other aspects, so as to avoid situations where the form design is overly complex, resulting in inconvenience for users to fill in or insufficient friendliness for display devices with small-sized screens.

To address the above issues, in the embodiments of the present disclosure, the form may include a product information column, a base bid column, and a premium configuration column. The base bid column and the premium configuration column may be shared by multiple different advertisement placement methods such as SS and SP. Of course, since for different advertisement placement methods such as SS and SP, the same product may correspond to different bid prices (for the SS method, there may also be bids for keywords, etc.), and under different advertisement placement methods, premium configuration also needs to be performed from different dimensions, among other considerations. Therefore, multiple tab options may also be provided in the form, each corresponding to a different advertisement placement method, so that by switching between these tab options, the user can select which advertisement placement method to configure bids and premiums for, and correspondingly, the columns in the form can display the corresponding operation options for configuring bids and premiums for different advertisement placement methods respectively.

In this way, bid and premium configurations for multiple different advertisement placement methods can be completed within the same form, and the format of the form is relatively simple, requiring only a few columns, thus effectively simplifying configuration operations and shortening the page length. In addition, since multiple operations are completed within the same form, there is no longer a need to repeatedly view product bid information and other information across multiple forms; if a user modifies certain configurations, such as deleting a product, the impact of that modification can be directly displayed in the form, and accordingly, the user can directly perceive the impact of the configuration modification in the form.

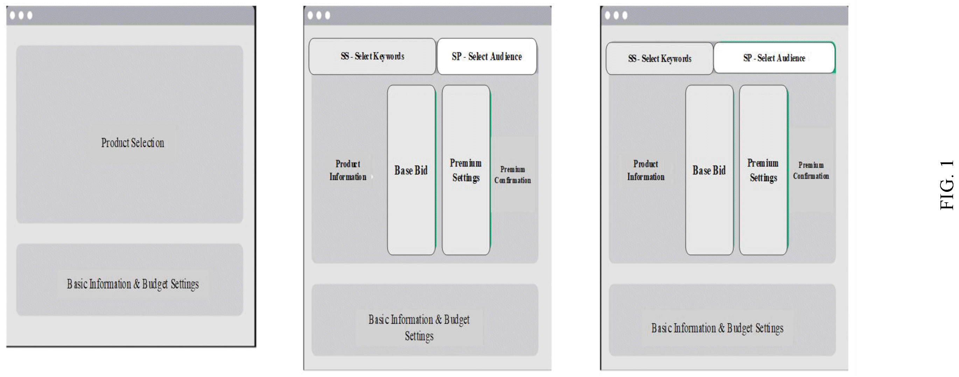

From a system architecture perspective, referring to FIG. 1, the embodiments of the present disclosure can provide advertisement placement-related services within merchant backend services provided by a product information service system to merchants, and optimize the service page. In the optimized solution, after a user completes product selection, the user can not only complete the purchase of multiple types of advertisements such as SS and SP on the same page, but can also complete bid and premium configurations for multiple types of advertisements such as SS and SP within a single form. Moreover, the form format has been specially designed to include four main columns: product information, base bid, premium settings, and premium confirmation. Among these, the base bid column and the premium settings column can be shared among multiple different advertisement placement methods such as SS and SP. To achieve this, multiple tab options are also provided, each corresponding to a different advertisement placement method such as SS or SP. By selecting a tab option, the user can choose which advertisement placement method to configure for bidding and premium in the form. After completing the bid and premium configuration for one advertisement placement method, the user can switch to another advertisement placement method via the tab options to configure its bid and premium. This allows bid and premium configurations for different advertisement placement methods to all be completed within a single form. Through the design of the above-described format, the number of columns in the form can be reduced, preventing the form structure from becoming overly complex, facilitating user operation, and at the same time being more friendly to display devices with small-sized screens.

The specific implementation solutions provided by the embodiments of the present disclosure are described in detail below.

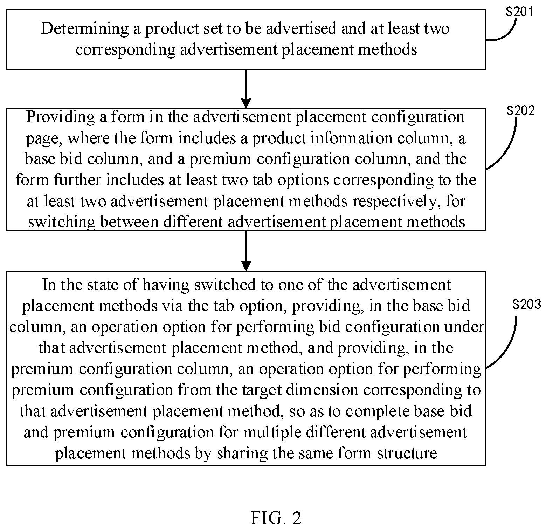

First, the embodiments of the present disclosure provide an advertisement placement configuration page display method. Referring to FIG. 2, the method may specifically include:
S201: determining a product set to be advertised and at least two corresponding advertisement placement methods.

In specific implementations, for users such as merchants, before actually placing advertisements, it may be necessary to formulate an advertisement placement plan, which may include specifying which products to advertise, whether to place SS-type advertisements, SP-type advertisements, or both SS-type and SP-type advertisements simultaneously, and so on. Of course, in practical applications, in addition to SS and SP, there may be other advertisement placement methods as well, which are not limited here.

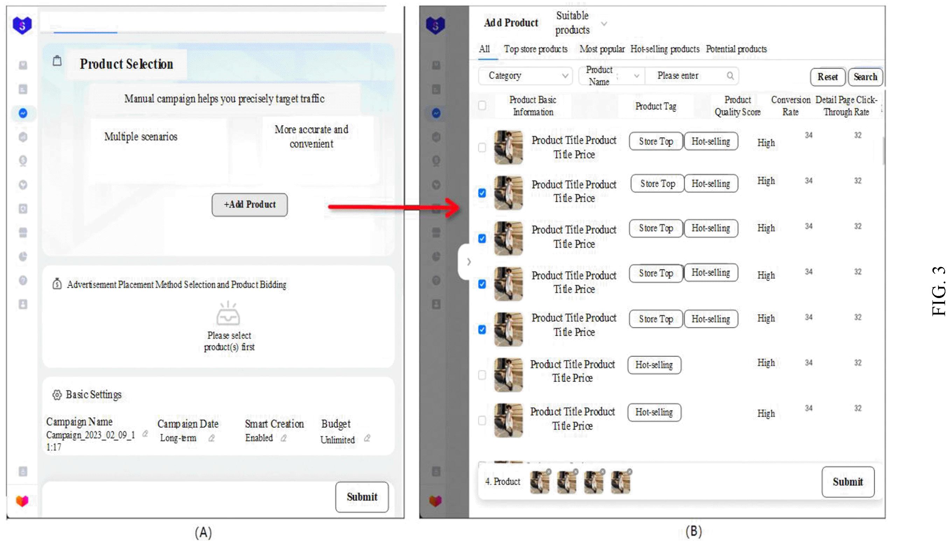

Therefore, after a user initiates an advertisement placement request, the user may first be guided to select the products that need to be advertised. For example, as shown in (A) of FIG. 3, an operation option such as "Add Product" may be provided on the advertisement placement page; by clicking this option, a list of candidate products can be displayed, for example, as shown in (B) of FIG. 3. Assuming the current user is a merchant user, the specific product list may display the products published in the stores associated with that merchant, and so on. Through this product list, product selection can be performed; in the embodiments of the present disclosure, multiple products may be selected to form the product set for the current advertisement placement plan. Of course, the product set may also include only a single product.

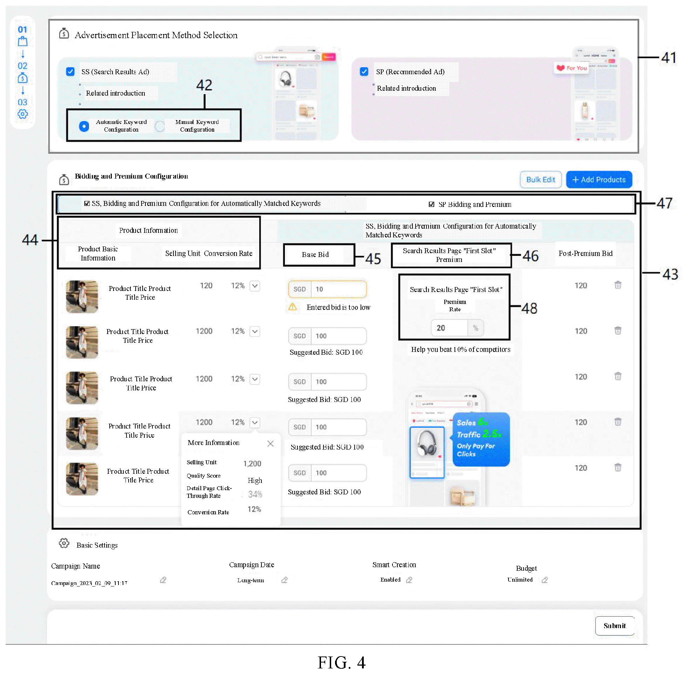

In addition, after completing the product selection, operation options for selecting the advertisement placement method may also be provided on the advertisement placement page. For example, as shown at position 41 in FIG. 4, assuming there are two types of advertisements available-SS and SP-options for SS and SP are shown, and the user may select only one type of advertisement for placement, or select both types. Of course, in the embodiments of the present disclosure, the focus is primarily on the scenario where multiple different advertisement placement methods are selected for the same product set, for example, where both SS and SP advertisements are to be placed simultaneously for the current product set, and so on.

It should be noted that for SS-type advertisements, i.e., the case where advertisements need to be placed on the product search results page, keywords are also involved - that is, corresponding keywords need to be determined separately for each product, so that when a consumer enters specific keywords to perform a search, it can be determined which products have the opportunity to compete with other products for special positions in the search results, and so on. For the specific keywords, the embodiments of the present disclosure may support automatic keyword configuration for products (i.e., the system algorithm automatically matches purchasable keywords for specific products without requiring the user to perform manual configuration), or the user may also configure keywords for products themselves (a single product may be configured with multiple keywords), among other different keyword configuration methods. Of course, under different keyword configuration methods, the information displayed in the base bid column of the specific form during subsequent bid configuration may differ; therefore, the selection of the keyword configuration method may also be completed during the process of selecting a specific advertisement placement type. That is, if the advertisement placement method selected by the user includes SS-type advertisements, the keyword configuration method may also be selected at the same time. For example, as shown at position 42 in FIG. 4, two options of "automatic keyword configuration" and "manual keyword configuration" may be included, from which the user may select one keyword configuration method.

S202: providing a form in the advertisement placement configuration page, where the form includes a product information column, a base bid column, and a premium configuration column, and the form further includes at least two tab options corresponding to the at least two advertisement placement methods respectively, for switching between different advertisement placement methods.

After determining the product set to be advertised and the corresponding advertisement placement methods, a form may be provided in the advertisement placement configuration page. In the embodiments of the present disclosure, the form may include a product information column, a base bid column, and a premium configuration column. The product information column may be further subdivided; for example, the form may be as shown at position 43 in FIG. 4, where position 44 shows three subdivided product information columns, including a product basic information column (used to identify which product it is; specific list items in this column may display the product's main image, title, and other information to facilitate user identification), a price column, a conversion rate column, and so on, to serve as a reference for users when configuring bids and premiums. In addition, the form may also include a base bid column as shown at position 45 in FIG. 4, and a premium configuration column as shown at position 46. Furthermore, since premium configuration primarily involves configuring the premium rate, in order to allow users to more intuitively view the bid result after applying the premium, a premium confirmation column may also be provided in the form, displaying the post-premium bid result calculated by the formula "base bid × (1 + premium rate)," and so on.

In addition, since different advertisement placement methods may involve different bidding approaches and premium approaches for the same product, in order to allow different advertisement placement methods to share the same base bid column and premium configuration column in the form, at least two tab options corresponding to the at least two advertisement placement methods may also be provided in the form. For example, as shown at position 47 in FIG. 4, assuming that the advertisement placement methods selected by the user are SS and SP respectively, two tab options, "SS" and "SP," may be provided above the form. In this way, by switching between tab options, bid configuration and premium configuration for different advertisement placement methods can be performed separately within the form.

S203: in the state of having switched to one of the advertisement placement methods via the tab option, providing, in the base bid column, an operation option for performing bid configuration under that advertisement placement method, and providing, in the premium configuration column, an operation option for performing premium configuration from the target dimension corresponding to that advertisement placement method, so as to complete base bid and premium configuration for multiple different advertisement placement methods by sharing the same form structure.

After the above form is displayed, the user may switch to different advertisement placement methods via specific tab options to configure bids and premiums. In the default state, one of the tab options may be in a selected state; correspondingly, the base bid column in the form may provide an operation option for performing bid configuration under the advertisement placement method corresponding to that tab option (assumed to be method A), and the premium configuration column may provide an operation option for performing premium configuration from the dimension corresponding to advertisement placement method A. Thereafter, if the user switches to another tab option, the base bid column may provide an operation option for performing bid configuration under advertisement placement method B corresponding to that other option, and the premium configuration column may provide an operation option for performing premium configuration from the dimension corresponding to advertisement placement method B, and so on.

Among these, as previously described, the specific advertisement placement method may include SS, i.e., the method of placing advertisements for products on the product search results page based on keywords. When this advertisement placement method is in the selected state in the form, an operation option for performing premium configuration on resource slots at target positions in the search results page may be provided in the premium configuration column. Of course, under the SS method, keyword configuration is also involved. If the user selects automatic keyword configuration, the base bid column in the form may provide an operation option for performing bid configuration on automatically matched keywords during the process of automatically matching keywords for each product.

For example, assuming that the tab option corresponding to "SS" is selected and the user chooses automatic keyword configuration, the base bid column can provide operation options for placing bids on each product individually. That is, since the keywords for each product are automatically configured by the system's algorithm, the user only needs to place bids at the product dimension level. Regarding the premium configuration column, in an optional approach, the column name can be directly displayed as the dimension information related to "SS." For example, as shown at reference 46 in FIG. 4, since SS ads primarily support premium bidding based on special positions in the search results page - for example, premium bidding for the "first slot" in the search results page (i.e., the first resource slot) - the column name of the premium configuration column can be directly displayed as "Search Results Page 'First Slot' Premium," and correspondingly, operation options for configuring the premium rate for the "first slot" of the search results page can be provided in that column, as shown at reference 48 in FIG. 4. Here, since SS ads typically apply the same "first slot" premium configuration uniformly to all products, the premium configuration can be completed directly within the current form using the operation options provided in the premium configuration column. In addition, after completing the premium configuration, the form can also display in a "Post-Premium Bid" column the specific bid information for each product after the premium is applied, and so on.

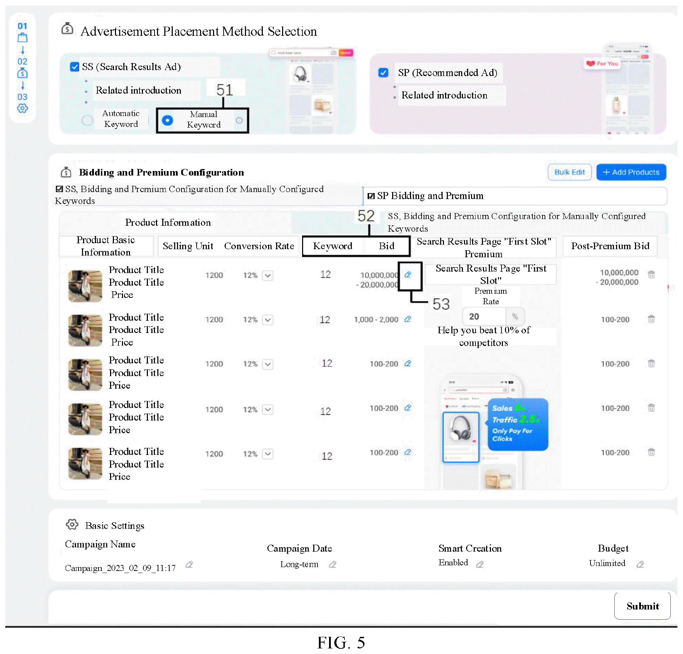

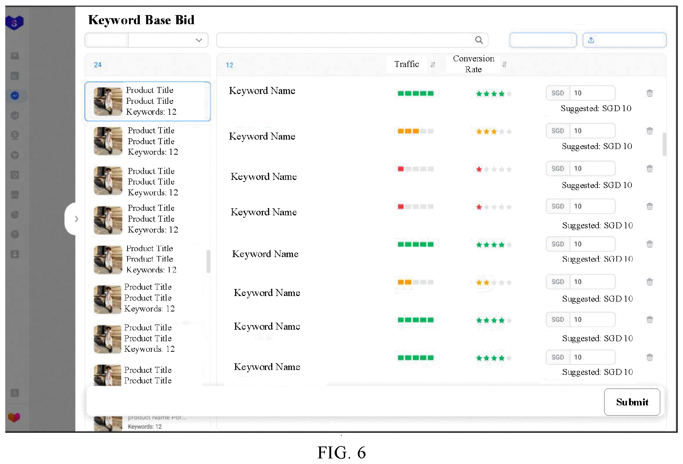

If the user selects manual keyword configuration, the base bid column in the form can display the bid range corresponding to at least one keyword matched to the current product, and provide an operation entry for editing the matched keywords for each product. After receiving a configuration request through this operation entry, operation options for performing keyword configuration and corresponding bid configuration for each individual product can be provided in a pop-up overlay interface. For example, as shown at 51 in FIG. 5, when the keyword configuration method for SS advertisements is selected as "manual keyword configuration," as shown at 52 in FIG. 5, the base bid column can be subdivided into a "keyword column" and a "bid column" - that is, the user can select keywords for each product individually and place bids at the keyword dimension. At the same time, an operation entry for editing each product can be provided; for example, as shown at 53 in FIG. 5, the user can enter an overlay interface through this operation entry. For example, as shown in FIG. 6, the overlay interface can display operation options for configuring keywords for a product and placing bids at the keyword dimension. Here, a single product can be configured with multiple keywords; in specific implementations, a unified bid can be placed for all keywords of all products, or alternatively, a unified bid can be placed for all keywords of the same product, or user-defined keyword addition can also be supported, with separate bids placed for each individual keyword of an individual product, and so on. For example, the interface shown in FIG. 6 illustrates the state that supports separate bidding for each individual keyword of an individual product. After the configuration is completed in the overlay interface, the specific configuration results can be displayed in the "keyword column" and "bid column" shown in FIG. 5. Here, since one product may correspond to multiple keywords and each keyword may correspond to a different bid, the "keyword column" can display multiple keywords (only one is shown in FIG. 5), and the "bid column" will no longer display a specific numerical value but will instead display a range, and so on.

In addition, for the SP advertisement placement method, i.e., the method of placing advertisements for products on the product recommendation page, when the tab option corresponding to this advertisement placement method in the form is in the selected state, the base bid column of the form may provide an operation option for placing bids on each product, and the premium configuration column may provide an operation entry for performing premium configuration from the audience dimension, so that after a configuration request is received via that operation entry, an operation option for performing audience selection and corresponding premium configuration may be provided in the pop-up overlay interface. That is to say, for the SP type advertisement placement method, since keywords are not involved, bids are placed directly at the product dimension. However, for premium configuration, since premiums can be configured for different audiences, an operation entry for performing premium configuration from the audience dimension may be provided in the premium configuration column; thereafter, an operation option for performing audience selection and corresponding premium configuration may be provided in the pop-up overlay interface.

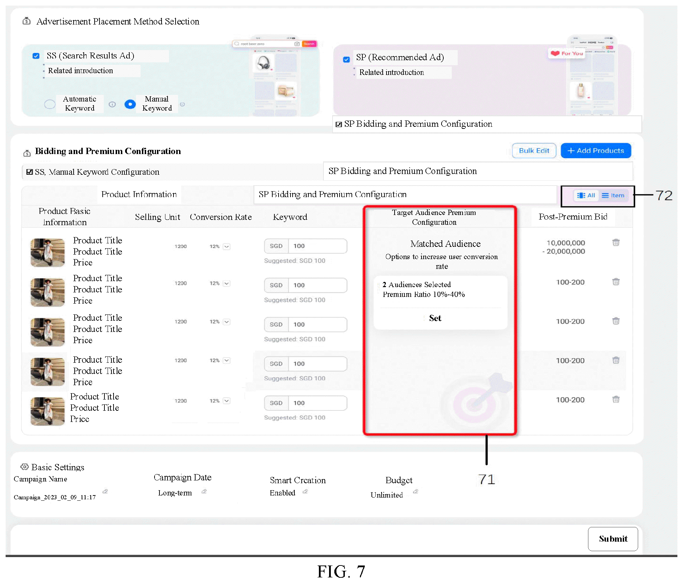

For example, as shown in FIG. 7, which illustrates the display state after switching the form's tab option to "SP," it can be seen that, compared to FIG. 5, the same form is still being used, the content of the product information column remains unchanged, and only the base bid column allows re-bidding at the product dimension level based on SP ads. In addition, in the premium configuration column, as shown at reference 71 in FIG. 7, the column name can be displayed as "Target Audience Premium Configuration," and the column can provide operation entries for audience selection and premium configuration, such as the "Set" option displayed therein, and so on. It should be noted that for premium bidding at the audience dimension, different modes can be supported, such as batch configuration or configuration at the individual product dimension. In the case of batch configuration, one or more audiences can be selected for all products in the current product set, and premium configuration can be performed for each audience individually; in this case, the configured premium rate applies to all products. For example, as shown at reference 72 in FIG. 7, two options - "All" and "Item" - can be provided, where the former is the batch configuration option and the latter is the option for configuring each product individually; FIG. 7 shows the state when the "All" option is selected. At this point, as can be seen from reference 71, two audiences have already been selected and premium rates have been configured for each audience respectively, and this audience and premium rate information applies to all products in the current product set.

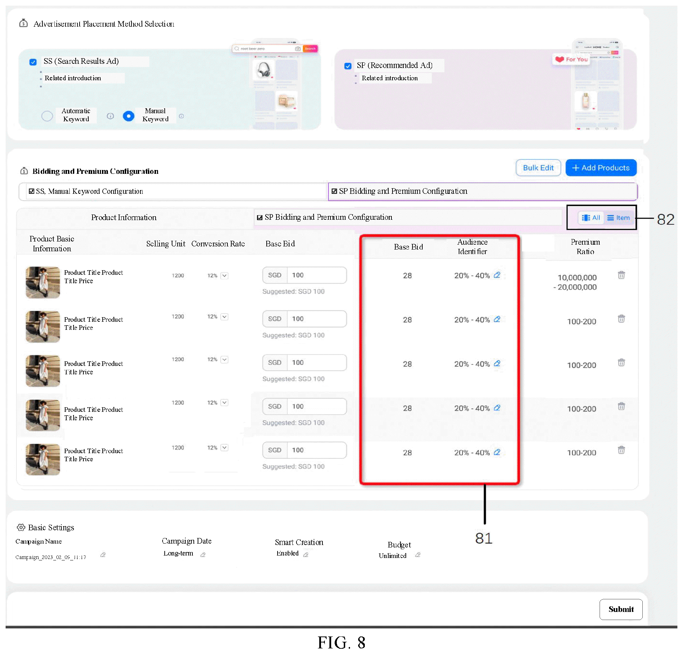

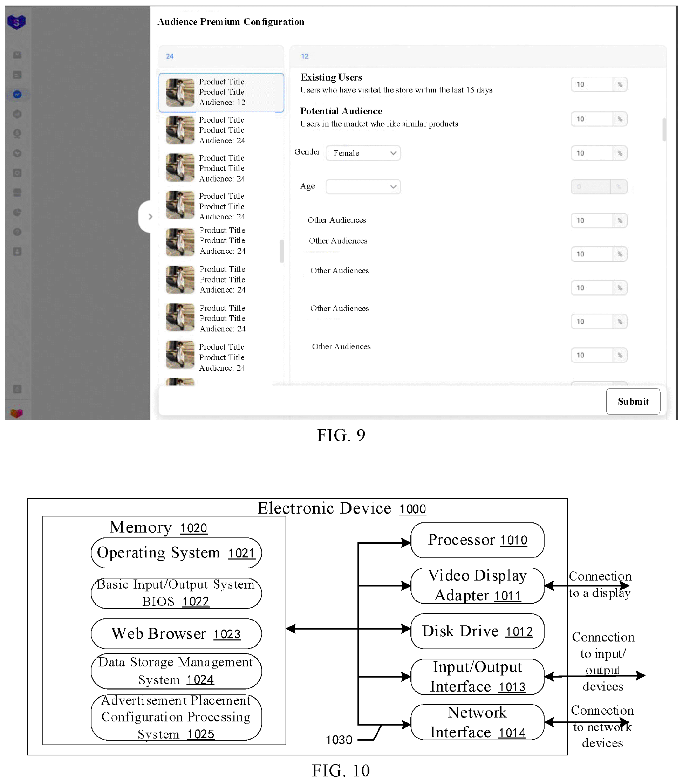

If different audiences need to be configured and premium configuration needs to be performed individually for each product, as shown at position 82 in FIG. 8, the user may first select the "Item" option, and then the premium configuration column shown at position 81 may display an editing entry point corresponding to each product. The user may access an overlay interface through this editing entry point, where operation options for performing audience selection and corresponding premium configuration are provided. For example, as shown in FIG. 9, the user may select the audiences for which premiums are to be applied for the current product and configure premium ratios separately. For example, for a certain product, the selected audience may be "existing users," i.e., users who have visited the store within the last 15 days (or another threshold), and "potential audience" may also be selected, and so on, with premium configuration performed separately for each audience. The configured data may be displayed in the premium configuration column shown in FIG. 8, as shown at position 81 in FIG. 8; at this point, the premium configuration column may be split into two columns, namely an "audience" column and a "premium" column, used respectively to display information such as the selected audience identifier and premium ratio corresponding to each product.

It should be noted that, in a specific implementation, in an advertisement placement plan, in addition to selecting products, advertisement placement methods, bids, premium configurations, and the like, there may also be configurations relating to the name, time, budget, and other aspects of the advertisement placement plan. In the embodiments of the present disclosure, such information may be displayed as basic information below the aforementioned form or in similar positions, and default attribute values may be provided. For example, "time" may be configured by default as "long-term," and "budget" may be configured by default as "unlimited," and so on. Of course, an operation entry for modifying these configuration items may be provided to the user, and the user may modify them according to actual circumstances.

In summary, through the embodiments of the present disclosure, in the case where a single page supports the placement of multiple different types of advertisements such as SS (search results ad) and SP (recommended ad), the configuration of bids and premium bids under multiple different advertisement placement methods can be completed within a single unified form. Moreover, the format of the form has been specially designed to require only a small number of columns, including a product information column, a base bid column, and a premium configuration column, and by providing corresponding tab options for different advertisement placement methods, the same form structure can be shared across different advertisement placement methods. Therefore, the configuration efficiency of multiple advertisement placement methods during complex configuration processes can be improved, while meeting complex and diverse advertisement placement requirements. In addition, multiple pages, multiple forms, and multiple configuration items can be consolidated, thereby effectively simplifying the form structure, reducing the page length, simplifying the user's configuration operations, and providing a more friendly experience for display devices with small-sized screens. Furthermore, since the above-mentioned multiple operations are completed within the same form, there is no longer a need to repeatedly check product bid information and other details across multiple forms, which is conducive to improving configuration efficiency. If the user modifies certain configurations - for example, deleting a product - the impact of such modification can be displayed directly within the form, and accordingly, the user can directly perceive the impact of the configuration modification operation within the form.

It should be noted that the embodiments of the present disclosure may involve the use of user data. In practical applications, user-specific personal data may be used in the solutions described herein within the scope permitted by applicable laws and regulations, provided that the requirements of the applicable laws and regulations of the jurisdiction are met (for example, the user has expressly consented, the user has been effectively notified, etc.).

Corresponding to the foregoing method embodiments, the embodiments of the present disclosure further provide an advertisement placement configuration page display apparatus, which may include:
an information determination unit, configured to determine a product set to be advertised and at least two corresponding advertisement placement methods;
a form display unit, configured to provide a form in an advertisement placement configuration page, where the form includes a product information column, a base bid column, and a premium configuration column, and the form further includes at least two tab options corresponding to the at least two advertisement placement methods, respectively, for switching between different advertisement placement methods;
a configuration item providing unit, configured to, in a state where one of the advertisement placement methods is switched to via the tab option, provide operation options in the base bid column for performing bid configuration under the advertisement placement method, and provide operation options in the premium configuration column for performing premium configuration from the target dimension corresponding to the advertisement placement method, so as to complete base bid and premium configuration under multiple different advertisement placement methods by sharing the same form structure.

The advertisement placement method includes a method of placing advertisements for products to the product search results page based on keywords;
when the tab option corresponding to that advertisement placement method in the form is in a selected state, providing, in the premium configuration column, an operation option for performing premium configuration for resource slots at the target position in the search results page.

Specifically, the advertisement placement configuration page further includes an operation option for selecting a keyword configuration method;
where, if automatic keyword configuration is selected, the base bid column in the form provides an operation option for performing bid configuration on automatically matched keywords during the process of automatically matching keywords for each product;
if manual keyword configuration is selected, the base bid column in the form displays the bid range corresponding to at least one keyword matched to the current product, and provides an operation entry for editing the keywords matched to each product, so that upon receiving a configuration request through the operation entry, an overlay interface is popped up to provide operation options for performing keyword configuration and corresponding bid configuration for each individual product;
where, when manual keyword configuration is selected, the base bid column is split into a keyword column and a bid column, for displaying the keywords corresponding to each product and the base bid information at the keyword dimension level, respectively.

Optionally, the pop-up overlay interface supports user-defined keyword addition, as well as individual bid configuration for each keyword of an individual product.

In addition, the advertisement placement method includes a method of placing advertisements for products on a product recommendation page;
in this case, when the tab option corresponding to the advertisement placement method in the form is in a selected state, an operation option for placing bids on each product is provided in the base bid column of the form, and an operation entry for performing premium configuration from the audience dimension is provided in the premium configuration column, so that after a configuration request is received through the operation entry, an operation option for performing audience selection and corresponding premium configuration is provided in the pop-up overlay interface.

In addition, an option for performing batch audience premium configuration for multiple products, or for performing individual premium configuration separately for each audience of an individual product, may also be provided.

Here, when the individual premium configuration option is selected, the premium configuration column is split into an audience identifier column and a premium ratio column, for displaying the audience identifiers and premium ratios configured for each product, respectively.

In addition, the embodiments of the present disclosure further provide a computer program which, when executed in a computer, causes the computer to perform the steps of any one of the methods described above.

In addition, the embodiments of the present disclosure further provide a computer-readable storage medium having a computer program stored thereon, the program, when executed by a processor, implementing the steps of the method described in any one of the foregoing method embodiments.

And an electronic device, comprises:
one or more processors; and
a memory associated with the one or more processors, the memory being configured to store program instructions which, when read and executed by the one or more processors, perform the steps of the method described in any one of the foregoing method embodiments.

Among these, FIG. 10 exemplarily illustrates the architecture of the electronic device, which may specifically include processor 1010, video display adapter 1011, disk drive 1012, input/output interface 1013, network interface 1014, and memory 1020. The processor 1010, video display adapter 1011, disk drive 1012, input/output interface 1013, and network interface 1014 may be communicatively connected to memory 1020 via communication bus 1030.

Among these, processor 1010 may be implemented using a general-purpose CPU (Central Processing Unit), a microprocessor, an Application Specific Integrated Circuit (ASIC), or one or more integrated circuits, and is used to execute relevant programs to implement the technical solutions provided by the present disclosure.

Memory 1020 may be implemented in the form of ROM (Read Only Memory), RAM (Random Access Memory), static storage devices, dynamic storage devices, or the like. Memory 1020 may store an operating system 1021 for controlling the operation of electronic device 1000, and a basic input/output system (BIOS) for controlling low-level operations of electronic device 1000. In addition, a web browser 1023, a data storage management system 1024, and an advertisement placement configuration processing system 1025, among others, may also be stored. The advertisement placement configuration processing system 1025 may be the application program that specifically implements the operations of the foregoing steps in the embodiments of the present disclosure. In summary, when the technical solutions provided by the present disclosure are implemented by software or firmware, the relevant program code is stored in memory 1020 and invoked and executed by processor 1010.

Input/output interface 1013 is configured to connect input/output modules to enable information input and output. Input/output modules may be configured as components within the device (not shown in the figure) or may be externally connected to the device to provide corresponding functions. Input devices may include a keyboard, mouse, touch screen, microphone, various sensors, and the like, and output devices may include a display, speaker, vibrator, indicator light, and the like.

Network interface 1014 is configured to connect a communication module (not shown in the figure) to enable communication interaction between this device and other devices. The communication module may implement communication via wired means (e.g., USB, network cable, etc.) or via wireless means (e.g., mobile network, WIFI, Bluetooth, etc.).

Bus 1030 includes a pathway for transferring information among the various components of the device (e.g., processor 1010, video display adapter 1011, disk drive 1012, input/output interface 1013, network interface 1014, and memory 1020).

It should be noted that although the above device only shows processor 1010, video display adapter 1011, disk drive 1012, input/output interface 1013, network interface 1014, memory 1020, bus 1030, and the like, in a specific implementation, the device may further include other components necessary for normal operation. Furthermore, those skilled in the art will appreciate that the device described above may also include only the components necessary to implement the solutions of the present disclosure, and need not include all components shown in the figure.

From the description of the above embodiments, those skilled in the art will clearly understand that the present disclosure may be implemented by means of software plus a necessary general-purpose hardware platform. Based on such understanding, the technical solutions of the present disclosure that essentially contribute to the prior art may be embodied in the form of a software product, which may be stored in a storage medium, such as ROM/RAM, magnetic disk, optical disc, etc., and includes a number of instructions for causing a computer device (which may be a personal computer, server, or network device, etc.) to perform the methods described in various embodiments or certain parts of the embodiments of the present disclosure.

Each embodiment in this specification is described in a progressive manner, and the same or similar parts among the various embodiments may be referred to each other, with each embodiment focusing on its differences from other embodiments. In particular, for system or system embodiments, since they are substantially similar to method embodiments, the description is relatively simple, and relevant portions may refer to the partial description of the method embodiments. The systems and system embodiments described above are merely illustrative, where the units described as separate components may or may not be physically separate, and the components displayed as units may or may not be physical units, i.e., they may be located in one place or may be distributed across multiple network units. Some or all of the modules may be selected according to actual needs to achieve the purpose of the solutions of the present embodiments. Those of ordinary skill in the art may understand and implement these without creative effort.

The advertisement placement configuration page display method and electronic device provided by the present disclosure have been described in detail above. Specific examples have been applied herein to illustrate the principles and implementations of the present disclosure. The description of the above embodiments is intended only to help understand the method of the present disclosure and its core concepts. At the same time, for those of ordinary skill in the art, based on the concepts of the present disclosure, there will be changes in the specific implementations and scope of application. In summary, the content of this specification should not be construed as limiting the present disclosure.

## Claims

1. An advertisement placement configuration page display method, comprising:
determining a product set to be advertised, and at least two corresponding advertisement placement methods;
providing a form in an advertisement placement configuration page, wherein the form includes a product information column, a base bid column, and a premium configuration column, and the form further includes at least two tab options corresponding to the at least two advertisement placement methods respectively, for switching between different advertisement placement methods;
in a state where one of the advertisement placement methods has been switched to via the tab options, providing, in the base bid column, an operation option for performing bid configuration under that advertisement placement method, and providing, in the premium configuration column, an operation option for performing premium configuration from a target dimension corresponding to that advertisement placement method, so as to complete the base bid and premium configuration under multiple different advertisement placement methods by sharing a same form structure.

2. The method of claim 1, wherein
the advertisement placement methods comprise a method of placing advertisements for products on a product search results page based on keywords;
when the tab option corresponding to this advertisement placement method in the form is in a selected state, providing, in the premium configuration column, an operation option for performing premium configuration for a resource slot at a target position in the search results page.

3. The method of claim 2, wherein
the advertisement placement configuration page further comprises an operation option for selecting a keyword configuration method;
wherein:
if automatic keyword configuration is selected, the base bid column in the form provides an operation option for performing bid configuration on automatically matched keywords during the process of automatically matching keywords for each product;
if manual keyword configuration is selected, the base bid column in the form displays the bid range corresponding to at least one keyword matched to a current product, and provides an operation entry for editing the keywords matched to each product, so that upon receiving a configuration request through the operation entry, an overlay interface is popped up to provide operation options for performing keyword configuration and corresponding bid configuration for each individual product.

4. The method of claim 3, wherein
when manual keyword configuration is selected, the base bid column is split into a keyword column and a bid column, for displaying keywords corresponding to each product and base bid information at a keyword dimension level, respectively.

5. The method of claim 3 or 4, wherein
the overlay interface supports user-defined keyword addition and individual bid configuration for each individual keyword of an individual product.

6. The method of any one of claims 1 to 5, wherein
the advertisement placement methods comprise a method of placing advertisements for products on a product recommendation page;
when the tab option corresponding to this advertisement placement method in the form is in a selected state, the base bid column of the form provides operation options for placing bids on each product, and the premium configuration column provides an operation entry for performing premium configuration from an audience dimension, so that upon receiving a configuration request through the operation entry, the overlay interface provides operation options for performing audience selection and corresponding premium configuration.

7. The method of claim 6, wherein
an option is provided for performing batch audience premium configuration for multiple products, or for performing individual premium configuration separately for each individual audience of an individual product.

8. The method of claim 7, wherein
when the individual premium configuration option is selected, the premium configuration column is split into an audience identifier column and a premium ratio column, for displaying the audience identifiers and premium ratios configured for each product, respectively.

9. A computer-readable storage medium having a computer program stored thereon, wherein when the program is executed by a processor, the program implements the steps of the method according to any one of claims 1 to 8.

10. An electronic device, comprising:
one or more processors; and
a memory associated with the one or more processors, the memory configured to store program instructions, wherein when the program instructions are read and executed by the one or more processors, the steps of the method according to any one of claims 1 to 8 are performed.

11. A computer program, wherein when the computer program is executed in a computer, and the computer is caused to perform the steps of the method according to any one of claims 1 to 8.
